**Europäisches Patentamt**

**European Patent Office**

**Office européen des brevets**

(11) Numéro de publication : **0 247 925 B1**

(12) # FASCICULE DE BREVET EUROPEEN

(45) Date de publication du fascicule du brevet :
13.03.91 Bulletin 91/11

(51) Int. Cl.⁵ : **H02G 15/26, H02G 15/117**

(21) Numéro de dépôt : 87401100.0

(22) Date de dépôt : 15.05.87

(54) **Procédé pour pressuriser un câble de télécommunication et dispositif pour la mise en oeuvre de ce procédé.**

(30) Priorité : 16.05.86 FR 8607047

(43) Date de publication de la demande :
02.12.87 Bulletin 87/49

(45) Mention de la délivrance du brevet :
13.03.91 Bulletin 91/11

(84) Etats contractants désignés :
ES GB IT

(56) Documents cités :
DE-U- 7 702 658
US-A- 3 342 056
US-A- 3 564 119

(73) Titulaire : Kerboul, Michel
47, Résidence du Roux
F-22300 Lannion (FR)
Titulaire : Petit, Régis
Saint Meen-Saint Quay Perros
F-22700 Perros Guirec (FR)

(72) Inventeur : Kerboul, Michel
47, Résidence du Roux
F-22300 Lannion (FR)
Inventeur : Petit, Régis
Saint Meen-Saint Quay Perros
F-22700 Perros Guirec (FR)

(74) Mandataire : Armengaud Ainé, Alain et al
Cabinet ARMENGAUD AINE 3 Avenue
Bugeaud
F-75116 Paris (FR)

## Description

La présente invention est relative à un procédé permettant d'enfermer un milieu gazeux sous pression à l'intérieur de la gaine d'un câble de télécommunication et concerne également un dispositif permettant d'effectuer la mise en oeuvre de ce procédé. L'invention s'étend par ailleurs aux câbles de ce genre, où la mise sous pression de leur gaine est réalisée conformément au procédé.

On sait que, dans le domaine des télécommunications, en particulier pour les câbles de transmission et plus spécialement pour ceux qui comportent un faisceau de fibres optiques, ou de façon plus générale en relation avec tout système comprenant des éléments conducteurs enfermés à l'intérieur d'une gaine de protection extérieure, il peut être souhaitable, voire nécessaire, de maintenir à l'intérieur de cette gaine une pression d'un milieu gazeux approprié, notamment de l'air sec, qui évite la détérioration des éléments conducteurs susceptible de résulter, en l'absence d'une telle pressurisation, de l'humidité ayant pu s'introduire dans le câble, surtout lorsque celui-ci est enterré. Afin de réaliser une telle mise sous pression d'air sec, il est généralement proposé d'adjoindre à la gaine du câble une valve à clapet, qui peut être raccordée de façon simple et à la demande à une source de pression appropriée.

Or, sur les câbles de télécommunication actuellement en usage, les valves d'alimentation sont généralement montées sur une manchette en un matériau thermo-rétractable, entourant la gaine du câble au droit d'un passage de communication prévu dans celle-ci, cette manchette qui présente une fente afin de permettre son montage sur un câble déjà posé, étant ensuite rétreinte sur la gaine à l'aide de la flamme d'un chalumeau et/ou d'un pistolet à air chaud. La rétraction de la manchette sur la gaine du câble permet de réaliser l'étanchéité entre ces deux éléments, la valve communiquant alors avec l'intérieur du câble par le passage prévu dans sa gaine. Avantageusement, une colle thermofusible enduit la face interne de la manchette et est ramollie au cours de l'opération de chauffage de celle-ci, ce qui assure une bonne adhérence entre la manchette et la gaine externe du câble. Un tel dispositif et procédé est décrit dans le document DE-U-7 702 658.

Mais cette solution classique présente un grave inconvénient, d'autant plus préjudiciable si le câble à pressuriser contient des fibres optiques au lieu de conducteurs métalliques. En effet, l'apport de chaleur, notamment par la flamme d'un chalumeau prévoyant une élévation de la température jusqu'à un seuil de l'ordre de 100°C ou même supérieur, peut être rédhibitoire, le choc thermique imposé aux fibres optiques pouvant, dans ces conditions, être tel qu'il limite considérablement la durée de vie de ces fibres ou même provoque un endommagement direct de ces dernières, nécessitant sur le câble des réparations délicates et coûteuses.

La présente invention concerne un procédé pour pressuriser un câble de télécommunication qui évite ces inconvénients, en supprimant tout apport de chaleur brutal par un chalumeau ou autre appareil du même genre, tout en assurant de façon sûre, rapide et peu coûteuse la liaison étanche entre une valve d'admission d'un milieu gazeux de presurisation et la gaine du câble à pressuriser.

A cet effet, le procédé considéré pour la mise sous pression avec un milieu gazeux de la gaine externe d'un câble de télécommunication comportant un orifice de passage à mettre en relation avec une valve d'admission de ce milieu gazeux, se caractérise en ce qu'il consiste à entourer le câble d'un boîtier étanche muni dans sa paroi de la valve d'admission et délimitant autour du câble un logement annulaire étanche communiquant avec l'intérieur du câble par l'orifice de passage, la valve étant disposée sensiblement au droit de cet orifice, à monter dans le boîtier entre la gaine du câble et contre la surface intérieure de ce boîtier un coussin élastique présentant un conduit transversal percé dans son épaisseur pour mettre en relation la valve et l'orifice, puis à injecter dans le boîtier à l'extérieur du coussin élastique et autour de la gaine un remplissage d'un matériau thermodurcissable d'étanchéité.

On réalise ainsi, autour de la gaine du câble et à l'extérieur d'un coussin élastique en appui contre celle-ci et la surface intérieure du boîtier, par exemple en mousse plastique, un logement étanche dans lequel peut être injecté un matériau thermodurcissable, notamment du genre d'une résine polymérisable, tel que, après durcissement de ce matériau, soit formé autour du câble un bloc rigide et étanche, le coussin de mousse évitant que l'injection de résine ne vienne s'introduire dans le conduit prévu à travers ce coussin et qui met en communication l'orifice de la gaine et la valve d'admission. Dans ces conditions, la pressurisation du câble peut s'effectuer sans que la mise en oeuvre du procédé de l'invention exige un quelconque apport de chaleur extérieur, la résine injectée dans le boîtier entourant la gaine pouvant être durcie à la température ambiante ou, en tous cas, avec un apport de calories extérieur relativement limité, ne dépassant jamais le seuil au-delà duquel les fibres optiques constituant le câble risqueraient d'être endommagées et plus encore gravement détériorées.

L'invention concerne également un dispositif pour la mise en oeuvre du procédé précisé ci-dessus, caractérisé en ce qu'il comporte un boîtier fermé réalisé au moyen de deux coquilles propres à délimiter un logement autour de la gaine externe du câble à mettre sous pression d'un milieu gazeux, ce boîtier comportant deux fonds en un matériau souple, parallèles et prédécoupés pour le passage de la gaine dans le logement du boîtier en venant en appui sur celle-ci de façon étanche, une valve d'admission montée dans la paroi d'une des coquilles en regard de l'orifice prévu dans la gaine, un coussin élastique monté dans le boîtier en appui étanche d'une part contre la surface intérieure de la coquille portant la valve et d'autre part contre la surface externe de la gaine, ce coussin présentant un conduit traversant faisant communiquer la valve et l'orifice de la gaine, et au moins un évent ménagé dans la paroi d'une des coquilles pour l'injection et le remplissage du logement formé du boîtier, des fonds, de la gaine et de la surface extérieure du coussin élastique, par un matériau thermodurcissable.

De préférence, le matériau injecté de remplissage du boîtier est une résine polymérisable, du genre résine polyester ou autre.

Dans un mode de réalisation préféré du dispositif selon l'invention, les deux coquilles du boîtier présentent chacune des flasques latéraux externes, aptes à venir deux à deux en appui l'un contre l'autre lorsque les deux coquilles entourent le câble, ces flasques présentant dans leurs faces en regard une rainure propre à recevoir un joint de mastic ou analogue pour assurer l'étanchéité du boîtier.

Selon une autre caractéristique, les flasques des coquilles une fois appliqués l'un sur l'autre, sont serrés par des clips ou agrafes externes, pinçant ces flasques par l'extérieur.

Selon une autre caractéristique avantageuse de l'invention, les fonds du boîtier et le coussin élastique sont réalisés en un matériau en mousse à cellules fermées, notamment en mousse de polyuréthane.

Selon une autre caractéristique également du dispositif considéré, la coquille comprenant l'évent d'injection du matériau thermodurcissable à l'intérieur du logement du boîtier comporte un second évent, distinct du premier, pour l'évacuation du trop-plein de matériau après remplissage complet du logement.

On réalise ainsi pour la mise en oeuvre du procédé selon l'invention, un moule en deux parties susceptibles de s'adapter par l'extérieur autour du câble, en constituant avec la surface externe de la gaine un logement fermé, ce moule étant mis en place de telle sorte que le coussin de mousse plastique qu'il contient assure, par le conduit le traversant, la communication directe entre l'orifice de passage ménagé dans la gaine et la valve d'admission pour autoriser ainsi ultérieurement la pressurisation du câble. Les fonds du boîtier, également réalisés en une mousse plastique appropriée, permettent grâce à leur souplesse, d'ajuster le montage du moule avec des diamètres de câble variables. Toutefois, pour des différences de diamètre notables, le jeu entre les fonds et la surface externe de la gaine, peut selon une autre caractéristique de l'invention, être rempli par un ou plusieurs enroulements d'un matériau formant des surépaisseurs sur la gaine au droit de ces fonds.

D'autres caractéristiques d'un dispositif de pressurisation d'un câble de télécommunication selon l'invention apparaîtront encore à travers la description qui suit d'un exemple de réalisation, donné à titre indicatif et non limitatif, en référence au dessin annexé sur lequel :

   – La Figure 1 est une vue schématique en coupe longitudinale du dispositif permettant la mise en oeuvre du procédé considéré.

   – Les Figures 2 et 3 sont des vues en coupe transversale, respectivement selon les lignes II-II et III-III de la Figure 1, dans lesquelles les deux demi-coquilles constituant le boîtier sont représentées en position écartée (Figure 2) et en position rapprochée une fois ce boîtier mis en place autour du câble (Figure 3).

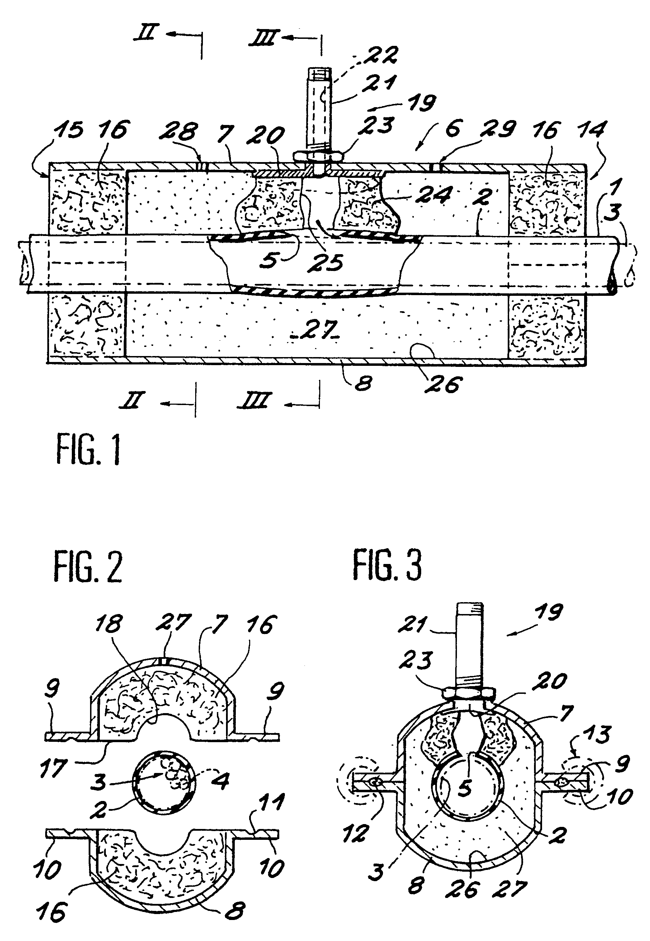

Sur ces Figures, la référence 1 désigne un câble de télécommunication comportant, d'une manière en elle-même connue dans la technique, une gaine extérieure 2 en un matériau approprié et dont la nature particulière est indifférente à l'invention, mais présentant d'une façon générale, des propriétés d'étanchéité adaptées à permettre sa mise sous pression d'un milieu gazeux, notamment d'air sec. A l'intérieur de sa gaine 2, le câble 1 contient un faisceau 3 d'éléments conducteurs, par exemple un ensemble de fibres optiques, schématiquement désignées en 4 sur la Figure 2. En outre, afin de permettre la mise sous pression du câble, la gaine 2 comporte un orifice de passage 5 par lequel l'air sec à introduire dans cette gaine peut être amené conformément aux dispositions de l'invention.

Ainsi, pour assurer l'admission d'air sec dans des conditions d'étanchéité satisfaisantes, sans risque de détériorer les fibles optiques contenues à l'intérieur de la gaine, on dispose autour de celle-ci un boîtier 6, constitué dans l'exemple de réalisation représenté, au moyen de deux demi-coquilles respectivement 7 et 8, dont les vues en coupe des Figures 2 et 3 illustrent plus particulièrement le profil. Ces coquilles présentent latéralement des flasques d'extrémités 9 et 10 aptes, lorsque les deux demi-coquilles sont appliquées l'une sur l'autre autour du câble 1, de venir en contact, ces flasques présentant avantageusement dans leurs faces en regard une rainure 11, recevant un joint 12 de mastic ou d'un autre matériau analogue, assurant l'étanchéité du montage. En outre, et comme illustré sur la Figure 3, l'application des deux coquilles 7 et 8 l'une sur l'autre par leurs flasques latéraux 9 et 10 peut être complétée, en serrant le joint 12 par l'extérieur de ces flasques au moyen de clips ou agrafes 13, venant les pincer mutuellement.

Les coquilles 7 et 8 du boîtier 6 comportent par ailleurs, à chacune de leurs extrémités, des fonds respectivement 14 et 15, réalisés au moyen d'un matériau souple notamment une mousse de polyuréthane ou autre, ces fonds présentant dans leur bord dirigé vers le câble 1 une partie latérale plane 17 et une partie incurvée prédécoupée 18, apte à venir coiffer par l'extérieur la surface externe de la gaine 2, en assurant ainsi aux extrêmités du boîtier 6 une étanchéité par contact satisfaisante.

Dans la paroi d'une des coquilles du boîtier 6, par exemple la coquille 7 dans l'exemple représenté, sensiblement au milieu de sa dimension longitudinale, est montée une valve 19 pour l'admission du milieu gazeux à introduire à l'intérieur de la gaine 2, notamment de l'air sec, fourni par un générateur extérieur (non représenté). Cette valve 19 du genre valve de bicyclette ou analogue comporte en bout un épaulement 20 appliqué sous la paroi de la coquille 7 et traverse cette dernière par un embout 21 muni axialement d'un alésage 22 pour le passage de l'air à travers un clapet (non représenté) mais d'un type en lui-même classique. L'immobilisation de la valve 19 sur la coquille 7 est réalisée au moyen d'un écrou de blocage 23, coopérant avec une partie filetée de l'embout 21.

A l'intérieur du boîtier 6, en particulier au droit de la valve 19 et de l'orifice 5 prévu dans la gaine 2 et placé en regard de la valve par un positionnement adéquat du boîtier 6, est monté un coussin élastique 24, en un matériau souple et de préférence également en mousse de polyuréthane, analogue à celui qui constitue les fonds 14 et 15 du boîtier, le coussin 24 présentant un conduit traversant 25, destiné à la mise en communication directe de la valve 19 et de l'orifice 5.

Le montage des différentes pièces précédemment décrites permet de délimiter à l'intérieur du boîtier 6, entre ses fonds 14 et 15 et la surface externe de la gaine 2 du câble d'une part, le coussin de mousse 24 à l'extérieur de celui-ci d'autre part un logement annulaire fermé et étanche 26, dans lequel peut être injecté une résine thermodurcissable 27, par exemple du genre résine polyester, introduite dans le logement par un évent 28 ménagé dans la paroi de la coquille 7. Avantageusement, un second évent 29 est prévu dans la même coquille à l'opposé de l'évent 28 vis-à-vis de la valve 19, afin de permettre, une fois le remplissage du logement 26 par la résine 27 complètement réalisé, l'évacuation du trop-plein éventuel de cette résine.

On constitue ainsi autour du coussin élastique 24 assurant lui-même l'étanchéité entre le boîtier et la surface externe de la gaine 2, un bloc de résine durcie, à travers lequel le conduit 25 laisse un libre passage pour l'air sec à introduire sous la gaine en vue d'obtenir une pressurisation convenable du câble. Cette opération peut être alors réalisée sans qu'ait été à aucun moment nécessaire de faire intervenir un apport de calories capable de détériorer les éléments conducteurs et en particulier les fibres optiques du câble, le durcissement de la résine pouvant s'effectuer à la température ambiante ou, le cas échéant, avec une élévation de température réduite restant de toute façon toujours largement en deça du seuil où ces fibres subiraient une atteinte nuisible. Notamment, on peut prévoir d'ajouter à la résine des additifs de prise rapide limitant encore la nécessité d'une élévation même restreinte de température.

Bien entendu, il va de soi que l'invention ne se limite pas à l'exemple de réalisation plus spécialement envisagé ci-dessus et représenté sur les dessins. En particulier, on conçoit aisément que l'on puisse adapter le dispositif décrit à des diamètres différents de câbles, soit en jouant sur la souplesse des fonds du boîtier qui épousent le câble avec une certaine faculté d'adaptation à la forme de celui-ci, soit en créant sur ce câble au droit de ces fonds des surépaisseurs rattrapant les jeux éventuels, réalisées avec un ou plusieurs enroulements d'un matériau plastique approprié.

**Revendications**

1. Procédé pour la mise sous pression avec un milieu gazeux de la gaine externe d'un câble de télécommunication comportant un orifice de passage à mettre en relation avec une valve d'admission de ce milieu gazeux, caractérisé en ce qu'il consiste :

à entourer le câble (1) d'un boîtier étanche (6) muni dans sa paroi de la valve d'admission (19) et délimitant autour du câble un logement annulaire étanche (26) communiquant avec l'intérieur du câble par l'orifice de passage (5), la valve étant disposée sensiblement au droit de cet orifice,

à monter dans le boîtier entre la gaine du câble et contre la surface intérieure de ce boîtier un coussin élastique (24) présentant un conduit transversal (25) percé dans son épaisseur pour mettre en relation la valve et l'orifice,

puis à injecter dans le boîtier à l'extérieur du coussin élastique et autour de la gaine de remplissage (27) d'un matériau thermodurcissable d'étanchéité.

2. Procédé selon la revendication 1, caractérisé en ce que le milieu gazeux est de l'air sec.

3. Dispositif pour la mise en oeuvre du procédé selon l'une des revendications 1 ou 2, caractérisé en ce qu'il comporte un boîtier fermé (6) réalisé au moyen de deux coquilles (7, 8) propres à délimiter un logement autour de la gaine externe (2) du câble (1) à mettre sous pression d'un milieu gazeux, ce boîtier comportant deux fonds (14-15) en un matériau souple, parallèles et prédécoupés pour le passage de la gaine dans le logement du boîtier en venant en appui sur celle-ci de façon étanche, une valve d'admission (19) montée dans la paroi d'une des coquilles en regard de l'orifice (5) prévu dans la gaine, un coussin élastique (24) monté dans le boîtier en appui étanche d'une part contre la surface intérieure de la coquille (7) portant la valve et d'autre part contre la surface externe de la gaine (2), ce coussin présentant un conduit traversant (25) faisant communiquer la valve et l'orifice de la gaine, et au moins un évent (28) ménagé dans la paroi d'une des coquilles pour l'injection et le remplissage du logement formé du boîtier, des fonds, de la gaine et de la surface extérieure du coussin élastique, par un matériau thermodurcissable (27).

4. Dispositif selon la revendication 3, caractérisé en ce que le matériau injecté (27) de remplissage du boîtier (6) est une résine polymérisable, du genre résine polyester ou autre.

5. Dispositif selon l'une des revendications 3 ou 4, caractérisé en ce que les deux coquilles (7-8) du boîtier (6) présentent chacune des flasques latéraux externes (9-10), aptes à venir deux à deux en appui l'un contre l'autre lorsque les deux coquilles entourent le câble, ces flasques présentant dans leurs faces en regard une rainure (11) propre à recevoir un joint (12) de mastic ou analogue pour assurer l'étanchéité du boîtier.

6. Dispositif selon la revendication 5, caractérisé en ce que les flasques (9-10) des coquilles (7-8) une fois appliqués l'un sur l'autre, sont serrés par des clips ou agrafes externes (13), pinçant ces flasques par l'extérieur.

7. Dispositif selon l'une quelconque des revendications 3 à 6, caractérisé en ce que les fonds (14-15) du boîtier (6) et le coussin élastique (24) sont réalisés en un matériau en mousse à cellules fermées, notamment en mousse de polyuréthane.

8. Dispositif selon l'une quelconque des revendications 3 à 7, caractérisé en ce que la coquille (7) comprenant l'évent d'injection (28) du matériau thermodurcissable (27) à l'intérieur du logement (26) du boîtier (6) comporte un second évent (29), distinct du premier, pour l'évacuation du trop-plein de matériau après remplissage complet du logement.

9. Dispositif selon l'une quelconque des revendications 3 à 8, caractérisé en ce que le jeu éventuel laissé libre entre les fonds et la gaine externe du câble est rempli par au moins un enroulement d'un matériau formant une surépaisseur sur la gaine au droit de chacun des fonds.

10. Câble de télécommunication mis sous pression au moyen d'un dispositif selon l'une quelconque des revendications 3 à 9 conformément au procédé des revendications 1 ou 2.

**Ansprüche**

1. Verfahren zum Unterdrucksetzen der Außenhülle eines Nachrichtenkabels mit einem Gas, wobei dieses Kabel eine Durchtrittsöffnung besitzt, die mit einem Einlaßventil für dieses Gas verbunden wird, dadurch **gekennzeichnet**, daß man

das Kabel (1) mit einem dichten Gefäß (6) umschließt, welches in seiner Wand ein Einlaßventil (19) besitzt und um das Kabel einen dichten Ringraum (26) abgrenzt, der mit dem Inneren des Kabels über die Durchtrittsöffnung (5) kommuniziert, wobei das Ventil im wesentlichen dieser Öffnung gegenüberliegend angeordnet ist,
in dem Gefäß zwischen der Hülle des Kabels und der Innenoberfläche dieses Gefäßes ein elastisches Kissen (24) anbringt, das mit einer quer verlaufenden Leitung (25) ausgestattet ist, die über ihre gesamte Dicke verläuft, um das Ventil mit der Öffnung zu verbinden,
und dann in das Gefäß außerhalb von dem elastischen Kissen und um die Hülle zum Ausfüllen ein abdichtendes thermohärtbares Material (27) injiziert.

2. Verfahren nach Anspruch 1, dadurch **gekennzeichnet**, daß es sich bei dem Gas um trockene Luft handelt.

3. Vorrichtung zur Durchführung des Verfahrens nach einem der Ansprüche 1 oder 2, dadurch **gekennzeichnet**, daß sie ein dichtes Gefäß (6), das aus zwei Schalen (7, 8) aufgebaut ist, die einen Raum um die Außenhülle (2) des mit einem Gas unter Druck zu setzenden Kabels (1) begrenzen können, wobei dieses Gefäß mit zwei Böden (14-15) aus einem weichen Material ausgestattet ist, die parallel angeordnet und derart ausgeschnitten sind, daß die Hülle in den Raum des Gefäßes geführt ist, wobei das Gefäß an diese in abdichtende Anlage kommt, ein Einlaßventil (19), das in der Wand einer der Schalen gegenüber der in der Hülle vorgesehenen Öffnung (5) angeordnet ist, ein elastisches Kissen (24), das in dem Gefäß angeordnet ist und einerseits gegen die Innenoberfläche der das Ventil tragenden Schale (7) und andererseits gegen die Außenoberfläche der Hülle (2) in dichtender Anlage ist, wobei dieses Kissen eine quer verlaufende Leitung (25) besitzt, welche das Ventil mit der Öffnung der Hülle verbindet, und mindestens ein in der Wand einer der Schalen ausgenommenes Loch (28) zum Injizieren und Füllen des von dem Gefäß, den Böden, der Hülle und der Außenoberfläche des elastischen Kissens gebildeten Raumes mit einem thermohärtbaren Material (27) besitzt.

4. Vorrichtung nach Anspruch 3, dadurch **gekennzeichnet**, daß das injizierte Material (27) zum Füllen des Gefäßes (6) ein polymerisierbares Harz von der Art eines polyesterharzes oder einer anderen Art ist.

5. Vorrichtung nach einem der Ansprüche 3 oder 4, dadurch **gekennzeichnet**, daß die beiden Schalen (7-8) des Gehäuses (6) jeweils seitliche Außenflansche (9-10) besitzen, die paarweise gegeneinander in Anlage kommen können, wenn die beiden Schalen das Kabel umgeben, wobei diese Flansche in ihren einander gegenüberliependen Flächen eine Rille (11) besitzen, die eine Dichtung (12) aus Mastix oder dergleichen zum Abdichten des Gehäuses aufnehmen kann.

6. Vorrichtung nach Anspruch 5, dadurch **gekennzeichnet**, daß die Flansche (9-10) der Schalen (7-8), nachdem sie aufeinandergelegt worden sind, von äußeren Klipsen oder Klammern (13) zusammengepreßt werden, welche diese Flansche von außen zusammenklemmen.

7. Vorrichtung nach einem der Ansprüche 3 bis 6, dadurch **gekennzeichnet**, daß die Böden (14-15) des Gefäßes (6) und das elastische Kissen (24) aus einem Schaummaterial mit geschlossenen Zellen, insbesondere aus einem polyurethanschaum, hergestellt sind.

8. Vorrichtung nach einem der Ansprüche 3 bis 7, dadurch **gekennzeichnet**, daß die das Loch (28) für die Injektion des thermohärtbaren Materials (27) aufweisende Schale (7) im Inneren des Raumes (26) des Gehäuses (6) eine zweite, von der ersteren getrennte Öffnung (29) zum Abführen des überschüssigen Materials nach dem vollständigen Füllen des Raumes besitzt.

9. Vorrichtung nach einem der Ansprüche 3 bis 8, dadurch **gekennzeichnet**, daß der gegebenenfalls zwischen den Böden und der Außenhülle des Kabels verbliebene Zwischenraum durch mindestens eine Bewicklung aus einem Material, das auf der Hülle den Böden gegenüberliegend eine Überdicke bildet, ausgefüllt ist.

10. Nachrichtenkabel, das mit Hilfe einer Vorrichtung nach einem der Ansprüche 3 bis 9 entsprechend dem Verfahren der Ansprüche 1 oder 2 unter Druck gesetzt worden ist.

## Claims

1. Process for pressurizing, with a gaseous medium, the external sheath of a telecommuncation cable comprising a through orifice to be brought into communication with an inlet valve for this gaseous medium, characterized in that it consists of :

surrounding the cable (1) with a leak-tight housing (6) equipped in its wall with the inlet valve (19) and defining around the cable a sealed annular space (26) communicating with the interior of the cable via the through orifice (5), the valve being disposed sensibly opposite this orifice,

mounting in the housing, between the sheath of the cable and the internal surface of this housing, an elastic cushion (24) having a transverse duct (25) perforated through its thickness for bringing the valve and the orifice into communication,

and then injecting, into the housing outside the elastic cushion and around the sheath, filler (27) of a sealing thermosetting material.

2. Process according to Claim 1, characterized in that the gaseous medium is dry air.

3. Device for carrying out the process according to one of Claims 1 or 2, characterized in that it comprises a closed housing (6) formed by means of two shells (7, 8) adapted for defining a space around the external sheath (2) of the cable (1) to be pressurized with a gaseous medium, this housing comprising two end walls (14, 15) of a flexible material, parallel to each other and precut for the passage of the sheath into the space of the housing and coming into bearing against this sheath in sealing manner, an inlet valve (19) mounted in the wall of one of the shells opposite the orifice (5) provided in the sheath, an elastic cushion (24) mounted in the housing in sealing bearing on the one hand against the internal surface of the shell (7) carrying the valve and on the other hand against the external surface of the sheath (2), this cushion possessing a through duct (25) providing communication between the valve and the orifice in the sheath, and at least one hole (28) formed in the wall of one of the shells for the injection and filling of the space formed by the housing, the end walls, the sheath and the external surface of the elastic cushion, with a thermosetting material (27).

4. Device according to Claim 3, characterized in that the injected material (27) for filling the housing (6) is a polymerizable resin, of the polyester or other class of resin.

5. Device according to one of Claims 3 or 4, characterized in that the two shells (7, 8) of the housing (6) each have external lateral flanges (9, 10), adapted for coming into bearing in pairs the one against the other when the two shells surround the cable, these flanges possessing, in their mutually opposite faces, a groove (11) adapted for receiving a seal (12) of mastic or the like for assuring sealing of the housing.

6. Device according to Claim 5, characterized in that the flanges (9, 10) of the shells (7, 8), once they have been applied against each other, are pressed together by external clips or clamps (13) pinching these flanges from the outside.

7. Device according to any one of Claims 3 to 6, characterized in that the end walls (14, 15) of the housing (6) and the elastic cushion (24) are formed of a closed-cell foam material, notably of polyurethane foam.

8. Device according to any one of Claims 3 to 7, characterized in that the shell (7) comprising the hole (28) for injection of the thermosetting material (27) into the space (26) of the housing (6) comprises a second hole (29), distinct from the first, for the discharge of the overflow of material after complete filling of the space.

9. Device according to any one of Claims 3 to 8, characterized in that any clearance that may be left free between the end walls and the external sheath of the cable is filled with at least one wrapping of a material forming an extra thickness on the sheath at the position of each of the end walls.

10. Telecommunication cable pressurized by means of a device according to any one of Claims 3 to 9 in accordance with the process of Claims 1 or 2.

FIG. 1

FIG. 2

FIG. 3